# EUROPÄISCHE PATENTSCHRIFT

(11) **EP 0 757 871 B1**
(45) Veröffentlichungstag und Bekanntmachung des Hinweises auf die Patenterteilung: **06.08.1997**
(21) Anmeldenummer: 95913007.1
(22) Anmeldetag: 06.03.1995
(51) Int. Cl.: H04M 15/00, H04Q 7/22

(54) **VERFAHREN ZUR ERMITTLUNG VON TEILNEHMERN EINES MOBILFUNKNETZES MIT ÜBERMÄSSIGEM VERKEHRSAUFKOMMEN**
PROCESS FOR DETECTING EXCESSIVE ACCOUNTS OF SUBSCRIBERS TO A MOBILE RADIO NETWORK
PROCEDE DE DETECTION DES FACTURES EXCESSIVES D'ABONNES D'UN RESEAU RADIOTELEPHONIQUE MOBILE

(30) Priorität: 26.04.1994 DE 4414500
(43) Veröffentlichungstag der Anmeldung: 12.02.1997
(73) Patentinhaber: DeTeMobil Deutsche Telekom MobilNet GmbH, 53227 Bonn (DE)
(72) Erfinder: DICKS, Markus, D-53604 Bad Honnef (DE); KÖSTER, Rüdiger, D-53639 Königswinter (DE); HOCHSCHERFF, Andreas, D-53129 Bonn (DE)
(74) Vertreter: Riebling, Peter, Dr.-Ing., Patentanwalt
(86) Internationale Anmeldenummer: DE9500299
(87) Internationale Veröffentlichungsnummer: WO9529554

(56) Entgegenhaltungen:
- WO-A-93/12606
- US-A- 4 979 207
- US-A- 5 144 649
- US-A- 5 148 472

## Beschreibung

Die Erfindung betrifft ein Verfahren zur Ermittlung von Teilnehmern eines Mobilfunknetzes mit übermäßigem Verkehrsaufkommen in andere Netze.

In Mobilfunknetzen werden Gebühren für die einzelnen Gespräche in den Vermittlungsstellen des Mobilfunknetzes (Mobilvermittlungsstellen) dezentral erfaßt und aufgezeichnet, dann zentral gesammelt und teilnehmerindividuell in einer Nachverarbeitung ausgewertet, worauf die Rechnungsstellung erfolgt. Die Rechnungsstellung erfolgt also im nachhinein für einen vorgegebenen Zeitraum.

In Mobilfunknetzen kommt es häufig zu illegaler Nutzung der Netzdienstleistungen, unter anderem durch Karten- oder Gerätediebstahl, durch Vortäuschung einer Zugangsberechtigung oder durch legalen Erwerb einer Zugangsberechtigung bei fehlender Zahlungsmoral. Die Netzdienste werden in diesen Betrugsfällen dann zumeist sehr intensiv genutzt, bis der Netzbetreiber erkennt, daß es sich um betrügerische bzw. zahlungsunwillige Kunden handelt. Bei Gesprächen von dem jeweiligen Mobilfunknetz in andere Netze (Übergangsnetze) entstehen hierdurch nicht nur Einnahmeverluste, sondern auch hohe Kosten, da die Nutzung des Übergangsnetztes dem jeweiligen Betreiber zu bezahlen ist. Diese Kosten sind unter anderem im Auslandsverkehr erheblich. Für ein rechtzeitiges Erkennen von derartigen Mißbräuchen ist jedoch das bekannte Verfahren zur Gebührenerfassung zu langsam.

Aus der WO-A-93/12606 ist ein Verfahren zur Ermittlung von Teilnehmern eines Mobilfunknetzes mit übermäßigem Verkehrsaufkommen in andere Netze bekannt geworden, wobei das Mobilfunknetz durch mehrere Nutz- und Siqnalisierunqskanäle mit einem anderen Netz verbunden ist. In einem solchen Mobilfunknetz kommt es häufig zu illegaler Nutzung der Netzdienstleistungen durch betrügerische oder zahlungsunwillige Kunden. Daher werden durch das beschriebene Verfahren die Gesprächsdaten aller Teilnehmer erfaßt und ausgewertet, um betrügerischen Aktivitäten auf die Spur zu kommen. Eine Erfassung und Überwachung aller Gesprächsdaten ist jedoch entsprechend teuer und technisch sehr aufwendig.

Aufgabe der Erfindung ist es daher, nur die Teilnehmer mit übermäßigem Verkehrsaufkommen in Übergangsnetze schnellstens zu erkennen.

Diese Aufgabe wird erfindungsgemäß durch die technischen Merkmale des kennzeichnenden Teils von Anspruch 1 gelöst.

Das erfindungsgemäße Verfahren ermöglicht praktisch eine Echtzeiterkennung von Teilnehmern mit übermäßigem Verkehrsaufkommen in Übergangsnetze. Dabei ist kein Zugriff auf die übertragenen Informationen (digitale Sprachsignale, Telefaxsignale oder andere Daten) erforderlich, sondern lediglich auf die Netzübergangssignalisierung, im wesentlichen der Verbindungsaufbau zum Teilnehmer im Übergangsnetz gesteuert wird. Die Durchführung des Verfahrens ist in dieser Hinsicht besonders einfach, da an den Netzübergängen die Signalisierung in einem getrennten Kanal übertragen wird.

Die Aufzeichnung des Netzübergangssignalisierungsverkehrs kann in einfacher Weise durch passiv aufgeschaltete Meßgeräte vorgenommen werden. Geeignete Meßgeräte sind für Wartungsarbeiten auf dem Markt erhältlich.

Ist eine Gesamtbündelung des Signalisierungsverkehrs (in alle Übergangsnetze) nicht möglich, so kann das Verfahren auch bei Teilbündelungen angewendet werden, wobei eine Einschränkung der Aufzeichnung der Signalisierung auf stark frequentierte und für den Betreiber des Mobilfunknetzes teure Übergangsnetze zweckmäßig ist.

Um eine Speicherung von Daten über das für die Zwecke des erfindungsgemäßen Verfahrens erforderliche Maß hinaus zu vermeiden, ist bei einer Weiterbildung der Erfindung vorgesehen, daß die aufgezeichneten Daten für die Teilnehmer, deren akkumulierten Größen vorgegebene Grenzen nach einer vorgegebenen Zeit nicht überschreiten, gelöscht werden. Im übrigen sind bei der Durchführung des erfindungsgemäßen Verfahrens wegen der Erhebung und Auswertung von personenbezogenen Daten die einschlägigen Datenschutzbestimmungen zu beachten.

Eine andere Weiterbildung des erfindungsgemäßen Verfahrens besteht darin, daß die vorgegebene Grenze teilnehmerindividuell festlegbar ist. Hierdurch kann berücksichtigt werden, daß Teilnehmer, bei denen eine Bezahlung auch hoher Gebühren gesichert ist, nicht unnötig gemeldet werden.

Das erfindungsgemäße Verfahren kann damit abgeschlossen werden, daß Daten der ermittelten Teilnehmer in geeigneter Weise ausgegeben werden. Dieses kann beispielsweise durch einen Ausdruck von Listen und/oder eine Anzeige auf Bildschirmen erfolgen. Bedienpersonen können dann entscheiden, ob und welche Maßnahmen zur Vermeidung eines weiteren Mißbrauchs zu treffen sind. Es kann jedoch gemäß einer Weiterbildung der Erfindung auch vorgesehen sein, daß diejenigen Teilnehmer, deren akkumulierten Größen die vorgegebene Grenze überschreiten, automatisch gesperrt werden.

Ausführungsbeispiele der Erfindung sind in der Zeichnung anhand mehrerer Figuren dargestellt und in der nachfolgenden Beschreibung näher erläutert. Es zeigt:
- Fig. 1: eine schematische Darstellung einer Anordnung zur Durchführung des Verfahrens,
- Fig. 2 und Fig. 3: schematische Darstellungen zweier Ausführungsbeispiele des Verfahrens und
- Fig. 4: eine Darstellung des erfindungsgemäßen Verfahrens mit Beispielen für die bei dem erfindungsgemäßen Verfahren zu verarbeitenden Daten.

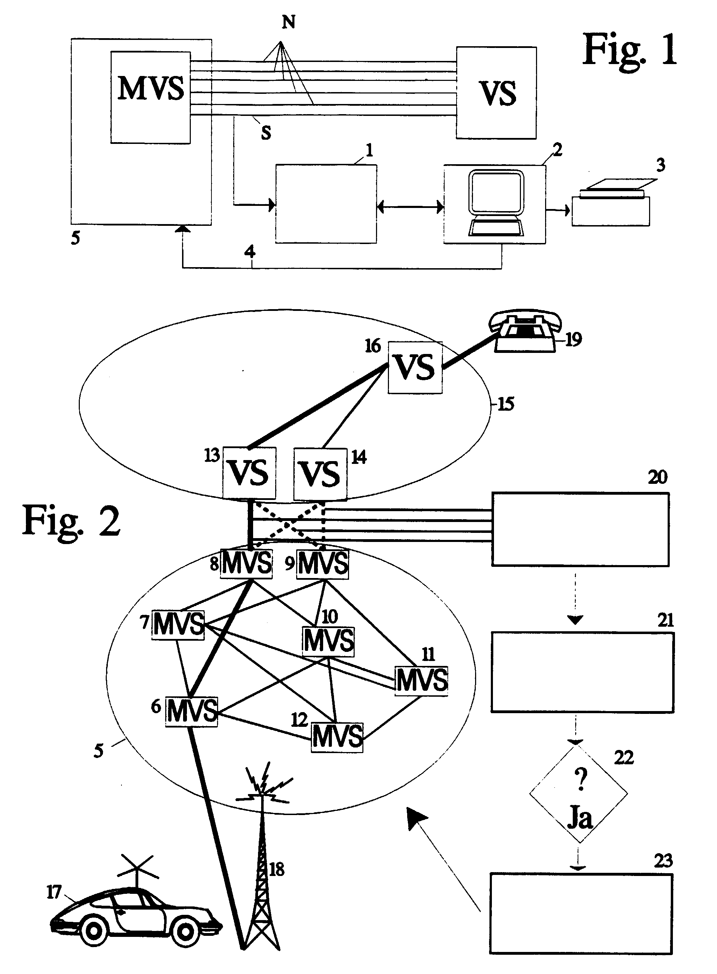

Fig. 1 zeigt eine Vermittlungsstelle MVS des mit dem erfindungsgemäßen Verfahren zu schützenden Mobilfunknetzes und eine Vermittlungsstelle VS eines Übergangsnetzes. Zur Verbindung beider Netze sind mehrere Kanäle für digitale Signale vorgesehen, wovon exemplarisch fünf Nutzkanäle N und ein Signalisierungskanal S in Fig. 1 dargestellt sind. An den Signalisierungskanal S ist der Eingang eines Aufzeichnungsgerätes 1 angeschlossen. Derartige Aufzeichnungsgeräte sind an sich bekannt und werden zu Meßzwecken verwendet.

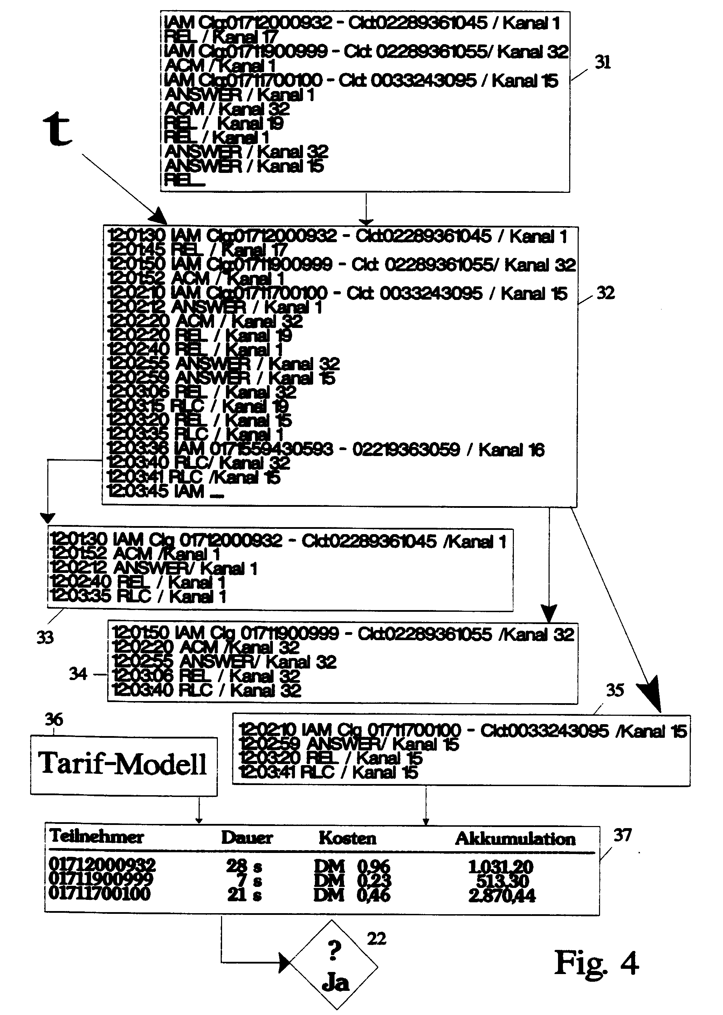

Die eingehenden digitalen Signale werden im Aufzeichnungsgerät 1 decodiert und auf einen geeigneten Datenträger aufgezeichnet. Weitere Erläuterungen zu den aufgezeichneten Signalen werden später im Zusammenhang mit Fig. 4 erläutert. Das Aufzeichnungsgerät ist mit einem Rechner 2 verbunden, in welchem die Auswertung der aufgezeichneten Daten erfolgt. Mit Hilfe des Rechners 2 können auch Eingaben vorgenommen werden, wie beispielsweise die Eingabe der Grenzwerte. Zu Protokollierungszwecken ist ferner ein Drucker 3 mit dem Rechner 2 verbunden.

Außerdem ist eine Datenverbindung 4 zum Mobilfunknetz vorgesehen, um eine Sperrung eines gemeldeten Teilnehmers entweder automatisch oder durch eine Eingabe über den Rechner 2 vornehmen zu können.

Fig. 2 zeigt ein Mobilfunknetz 5 mit mehreren Mobilvermittlungsstellen 6 bis 12. Davon verfügen zwei Mobilvermittlungsstellen 8, 9 über Datenleitungen zu Vermittlungsstellen 13, 14 eines Übergangsnetzes 15, von dem eine weitere Vermittlungsstelle 16 von möglicherweise sehr vielen Vermittlungsstellen dargestellt ist.

Ein Teilnehmer des Mobilfunknetzes ist in Form eines Fahrzeugs 17 dargestellt, von dem eine Funkverbindung zu einer Basisstation 18 besteht. Will der Teilnehmer 17 ein Gespräch mit einem Teilnehmer 19 im Übergangsnetz 15 führen, wird eine Verbindung vom Teilnehmer 17 über die Basisstation 18, die Mobilvermittlungsstellen 6 und 8, die Vermittlungsstellen 13 und 16 zum Teilnehmer 19 aufgebaut. Dazu wird unter anderem in dem Signalisierungskanal S (Fig. 1) eine Meldung übertragen, daß der Teilnehmer 17 mit dem Teilnehmer 19 verbunden werden soll und in welchem der Kanäle N die Sprachsignale bzw. andere Informationssignale von der Mobilvermittlungsstelle 8 zur Vermittlungsstelle 13 übertragen werden.

Diese und weitere Signalisierungsmeldungen werden aufgezeichnet (20). Aus den aufgezeichneten Signalisierungsmeldungen erfolgt bei 21 eine Rekonstruktion von Gesprächsdaten unter Identifizierung des Teilnehmers. Außerdem wird bei 21 eine Akkumulierung der Gesprächsdaten je Teilnehmer vorgenommen. Bei 22 wird dann entschieden, ob eine Grenze überschritten ist. Ist dieses der Fall, erfolgt eine Meldung zur Sperrung des Teilnehmers an die Teilnehmerverwaltung 23 des Mobilfunknetzes 5.

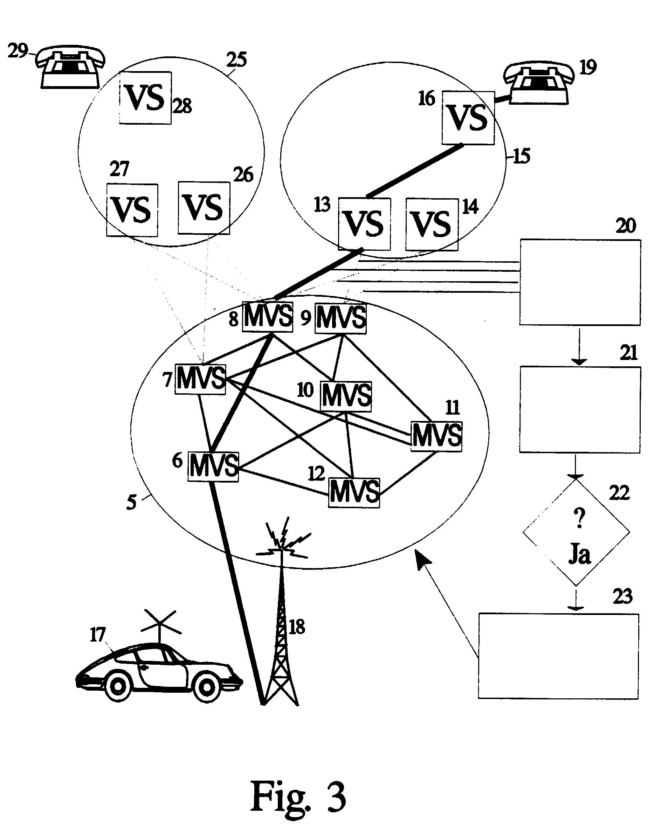

Fig. 3 zeigt die gleichen Netze, Netzkomponenten und Verfahrensschritte wie Fig. 2. Außerdem ist ein weiteres Übergangsnetz 25 mit drei Vermittlungsstellen 26, 27, 28 und einem Teilnehmer 29 dargestellt. Die Vermittlungsstellen 26 und 27 des weiteren Übergangsnetzes 25 sind mit den Mobilvermittlungsstellen 7 und 8 des Mobilfunknetzes 5 verbunden. Die Einbeziehung des Übergangsverkehrs zwischen dem Mobilfunknetz 5 und dem weiteren Übergangsnetz 25 in die Überwachung mit dem erfindungsgemäßen Verfahren ist an sich möglich, wozu eine Echtzeitübertragung des Signalisierungsverkehrs zwischen dem Mobilfunknetz 5 und dem weiteren Übergangsnetz 25 zu einer Stelle erforderlich ist, welche die teilnehmerorientierte Akkumulierung der Gesprächsdaten auch für den Verkehr zwischen dem Mobilfunknetz 5 und dem Übergangsnetz 15 vornimmt. Häufig ist jedoch eine mit dem erfindungsgemäßen Verfahren zu unterbindende mißbräuchliche Benutzung auf ein Übergangsnetz beschränkt, so daß ein Aufwand für die Übertragung und die Zusammenfassung der Daten in solchen Fällen erspart werden kann.

Durch die Aufzeichnung und Zwischenspeicherung des Signalisierungsverkehrs entstehen Daten, die bei 31 in Fig. 4 beispielhaft aufgelistet sind. Diesen Daten wird eine Zeitinformation t in Form der Uhrzeit hinzugefügt, so daß sie die bei 32 dargestellte Form annehmen. Diese Daten werden teilnehmerorientiert zusammengefaßt, was schematisch anhand der für jeweils einen Teilnehmer gültigen Listen 33 bis 35 dargestellt ist.

Im einzelnen bedeutet in den Listen 31 bis 35
- IAM =: initial address message: eine Meldung, welche den rufenden und den gerufenen Teilnehmer sowie den Kanal, auf welchem das Gespräch übertragen werden soll, beinhaltet,
- Clg =: calling: es folgt die Nummer des rufenden Teilnehmers.
- Cld =: called: es folgt die Nummer des gerufenen Teilnehmers,
- ACM =: address complete: Adresse vollständig,
- REL =: release: ein Kommando zur Auflösung der Verbindung,
- RLC =: release complete: die Auflösung zur Verbindung ist abgeschlossen,
- ANSWER:: diese Nachricht signalisiert den Beginn des Gesprächs.

In diesen Meldungen sind für das erfindungsgemäße Verfahren IAM, ANSWER und REL von Bedeutung. Von den in der Meldung IAM übertragenen Teilnehmernnummern genügt im allgemeinen eine Auswertung der Netzkennzahl, da sich hieraus die Höhe der Gesprächsgebühren ergibt. Aus den Listen 33 bis 35 wird mit Hilfe der anwendbaren Tarife 36 jeweils die Summe der Gebühren berechnet (37) und bei Eintreffen neuer Gebühreninformationen aktualisiert. Die akkumulierte Gebühr wird dann bei 22 mit dem Grenzwert verglichen. In denjenigen Fällen, in denen eine Berechnung und Akkumulation der Gebühren unmittelbar nach Beendigung der einzelnen Gespräche nicht genügt, kann auch eine zwischenzeitliche Berechnung und Akkumulation der Gebühren vorgenommen werden, um gegebenenfalls vor der Beendigung extrem langer Gespräche reagieren zu können.

## Patentansprüche

1. Verfahren zur Ermittlung von Teilnehmern eines Mobilfunknetzes mit übermäßigem Verkehrsaufkommen in andere Netze, wobei das Mobilfunknetz durch mehrere Nutz- und Signalisierungskanäle mit einem anderen Netz verbunden ist, **dadurch gekennzeichnet**, daß der vom Mobilfunknetz ausgehende Netzübergangssignalisierungsverkehr durch ein passiv auf den Signalisierungskanal aufgeschaltetes Aufzeichnungsgerät aufgezeichnet und decodiert wird, daß aus dem aufgezeichneten Netzübergangssignalisierungsverkehr Gesprächsinformationen, insbesondere Kennzeichen des rufenden Teilnehmers, Dauer und Zielgebiet, rekonstruiert werden, daß aus den Gesprächsinformationen gewonnene Gebühren oder andere gebührenrelevante Größen unmittelbar nach ihrer Gewinnung teilnehmerbezogen akkumuliert werden und daß eine geeignet Ausgabe erfolgt, wenn der akkumulierten Größen eines Teilnehmers eine vorgegebene Grenze überschreiten.

2. Verfahren nach Anspruch 1, dadurch gekennzeichnet, daß die aufgezeichneten Daten für die Teilnehmer, deren akkumulierten Größen vorgegebene Grenzen nach einer vorgegebenen Zeit nicht überschreiten, gelöscht werden.

3. Verfahren nach einem der vorhergehenden Ansprüche, dadurch gekennzeichnet, daß die vorgegebene Grenze teilnehmerindividuell festlegbar ist.

4. Verfahren nach einem der vorhergehenden Ansprüche, dadurch gekennzeichnet, daß diejenigen Teilnehmer, deren akkumulierten Größen die vorgegebene Grenze überschreiten, automatisch gesperrt werden.

## Claims

1. Method for detecting subscribers of a mobile radio network having an excessive traffic volume to other networks, the mobile radio network being connected to another network by means of several useful and signalling channels, characterized in that the network gateway signalling traffic originating from the mobile radio network is recorded and decoded by a recording unit passively connected to the signalling channel, in that call information, in particular identifiers for the calling subscriber, the duration and the destination area, is reconstructed from the recorded network gateway signalling traffic, in that charges or other charge-relevant amounts obtained from the call information are accumulated immediately after they are obtained, related to the subscriber, and in that a suitable output is made if the accumulated amounts relating to a subscriber exceed a predetermined limit.

2. Method according to Claim 1, characterized in that the recorded data are erased for the subscribers whose accumulated amounts do not exceed predetermined limits after a predetermined time.

3. Method according to one of the preceding claims, characterized in that the predetermined limit can be defined on a subscriber-specific basis.

4. Method according to one of the preceding claims, characterized in that those subscribers whose accumulated amounts exceed the predetermined limit are automatically barred.

## Revendications

1. Procédé de détection des abonnés d'un réseau radiotéléphonique mobile dont le volume de trafic vers d'autres réseaux est excessif, selon lequel le réseau radiotéléphonique mobile est relié à un autre réseau par plusieurs canaux d'utilisation et de signalisation, **caractérisé** en ce que le trafic de signalisation de changement de réseau qui part du réseau radiotéléphonique mobile est enregistré par un appareil d'enregistrement relié passivement au canal de signalisation, et est décodé, en ce que des informations relatives aux conversations, en particulier l'identification de l'abonné qui appelle, la durée et la zone cible, sont reconstituées à partir du trafic de signalisation de changement de réseau enregistré, en ce que les taxes obtenues à partir des informations relatives aux conversations ou d'autres grandeurs liées aux taxes sont accumulées pour chaque abonné immédiatement après leur obtention, et en ce qu'une sortie appropriée a lieu lorsque les grandeurs accumulées d'un abonné dépassent une limite prédéfinie.

2. Procédé selon la revendication 1, caractérisé en ce que les données enregistrées pour les abonnés dont les grandeurs accumulées ne dépassent pas des limites prédéfinies, après un certain temps, sont effacées.

3. Procédé selon l'une des revendications précédentes, caractérisé en ce que la limite prédéfinie est apte à être fixée pour les abonnées individuels.

4. Procédé selon l'une des revendications précédentes, caractérisé en ce que les abonnés dont les grandeurs accumulées dépassent la limite prédéfinie sont automatiquement bloqués.
